(19) **Europäisches Patentamt**
**European Patent Office**
**Office européen des brevets**

(11) **EP 1 702 933 B1**

(12) **EUROPEAN PATENT SPECIFICATION**

(45) Date of publication and mention
of the grant of the patent:
**20.02.2019 Bulletin 2019/08**

(21) Application number: **04807243.3**

(22) Date of filing: **17.12.2004**

(51) Int Cl.:
*C08F 8/00* (2006.01)     *H01M 8/02* (2016.01)
*C08F 8/44* (2006.01)     *H01B 1/12* (2006.01)
*H01M 8/1023* (2016.01)     *H01M 8/1039* (2016.01)

(86) International application number:
**PCT/JP2004/018885**

(87) International publication number:
**WO 2005/058980 (30.06.2005 Gazette 2005/26)**

(54) **FLUOROPOLYMER, PROCESS FOR PRODUCING FLUOROPOLYMER, ELECTROLYTE FILM, OBJECT HAVING IMMOBILIZED ACTIVE SUBSTANCE, AND SOLID POLYMER ELECTROLYTE TYPE FUEL CELL**

FLUORPOLYMER, VERFAHREN ZUR HERSTELLUNG VON FLUORPOLYMER, ELEKTROLYTFILM, GEGENSTAND MIT IMMOBILISIERTEM WIRKSTOFF UND BRENNSTOFFZELLE VOM FESTPOLYMERELEKTROLYT-TYP

FLUOROPOLYMERE ET SON PROCEDE DE PRODUCTION, FILM ELECTROLYTE, OBJET PORTANT UNE SUBSTANCE ACTIVE IMMOBILISEE, ET PILE A COMBUSTIBLE A ELECTROLYTE POLYMERE SOLIDE

(84) Designated Contracting States:
**AT BE BG CH CY CZ DE DK EE ES FI FR GB GR HU IE IS IT LI LT LU MC NL PL PT RO SE SI SK TR**

(30) Priority: **17.12.2003 JP 2003420232**

(43) Date of publication of application:
**20.09.2006 Bulletin 2006/38**

(73) Proprietor: **DAIKIN INDUSTRIES, LTD.**
**Osaka-shi, Osaka 530-8323 (JP)**

(72) Inventors:
• **INO, Tadashi,**
**c/o DAIKIN INDUSTRIES, LTD.**
**Settsu-shi,**
**Osaka 5668585 (JP)**
• **KONDO, Masahiro,**
**c/o DAIKIN INDUSTRIES, LTD.**
**Settsu-shi,**
**Osaka 5668585 (JP)**

• **ISAKA, Tadaharu,**
**c/o DAIKIN INDUSTRIES, LTD.**
**Settsu-shi,**
**Osaka 5668585 (JP)**

(74) Representative: **Hoffmann Eitle**
**Patent- und Rechtsanwälte PartmbB**
**Arabellastraße 30**
**81925 München (DE)**

(56) References cited:
**EP-A- 1 666 508      EP-A1- 1 238 999**
**GB-A- 1 210 794      JP-A- 57 115 425**
**JP-A- 2004 075 979      JP-B1- 37 003 127**
**JP-B1- 46 023 245      US-A- 3 085 083**
**US-A- 3 085 083**

**Description**

TECHNICAL FIELD

The present invention relates to a fluoropolymer, a method of fluoropolymer production, an electrolyte membrane, an immobilized active substance material, a membrane-electrode assembly and a solid polymer electrolyte fuel cell.

BACKGROUND ART

It is known that unstable terminal groups occurring in a fluoropolymer cause not only foaming in the step of melt molding but also deterioration of the moldings manufactured from the fluoropolymer.
Typical unstable fluoropolymer terminal groups are carboxyl groups among others, and a method of stabilizing the same is known which comprises converting them into $-CF_3$ groups using a fluorinating agent (cf. e.g. Patent Document 1: Japanese Kokoku Publication S46-23245 and GB1210794). However, this method has certain problems; fluorine gas is to be used, an expensive corrosion-resistant apparatus is required, and a rise in expenditure results.
Another method of stabilizing carboxyl groups is known which comprises causing a -COOH-containing fluoropolymer to undergo decarboxylation in the presence of not more than 2% by mass of water for conversion to a more stable $-CF_2H$-containing fluoropolymer (cf. e.g. Patent Document 2: Japanese Kokoku Publication S37-3127). This document, however, gives no description of or suggestion about the hygroscopicity of a fluoropolymer having such specific functional groups as sulfonic acid groups.
US3085083 discloses a process to convert the carboxylate end groups of a fluorocarbon polymer into more stable $-CF_2H$ groups, which comprises heating the polymer at a temperature of 200°C to 400°C.

DISCLOSURE OF INVENTION

PROBLEMS WHICH THE INVENTION IS TO SOLVE

In view of the above-mentioned state of the art, it is an object of the present invention to provide a fluoropolymer improved in stability and a simple method of obtaining such fluoropolymer.

MEANS FOR SOLVING THE PROBLEMS

The present invention relates to a fluoropolymer containing acid/acid salt groups and having $-CF_2H$ groups at polymer chain terminals,
wherein said acid/acid salt groups are sulfonic acid groups, $-SO_2NR^1R^2$, $-SO_3NR^3R^4R^5R^6$, $-SO_3M^1_{1/L}$, phosphoric acid groups, $-PO_3(NR^7R^8R^9R^{10})_2$ and/or $-PO_3M^2_{2/L}$, in the formula $R^1$ represents H or $M^6_{1/L}$, $R^2$ represents H, $M^7_{1/L}$, an alkyl group or a sulfonyl-containing group, $R^3$, $R^4$, $R^5$, $R^6$, $R^7$, $R^8$, $R^9$ and $R^{10}$ are the same or different and each represents H or an alkyl group containing 1 to 4 carbon atoms, $M^1$, $M^2$, $M^6$ and $M^7$ are the same or different and each represents a metal having a valence of L, said metal having a valence of L being a metal belonging to the group 1, 2, 4, 8, 11, 12 or 13 of the long-form periodic table.
The present invention relates to a method of producing the fluoropolymer mentioned above, by subjecting a fluoropolymer precursor containing acid/acid salt groups and having $-CF_2COOX$ groups at polymer chain terminals, in the formula X represents H, $NR^{11}R^{12}R^{13}R^{14}$ or $M^4_{1/L}$; $R^{11}$, $R^{12}$, $R^{13}$ and $R^{14}$ are the same or different and each represents H or an alkyl group containing 1 to 4 carbon atoms and $M^4$ represents a metal having a valence of L, said metal having a valence of L being as defined above, to heat treatment for the conversion of said $-CF_2COOX$ groups to $-CF_2H$ groups, X being as defined above,
wherein said fluoropolymer precursor is one obtained by polymerizing a perhalovinyl ether derivative represented by the general formula (I):

$$CF_2=CF-O-(CF_2CFY^1-O)_n-(CFY^2)_m-SO_2Z \qquad (I)$$

wherein $Y^1$ represents F, Cl or a perfluoroalkyl group, n represents an integer of 0 to 3, the n atoms/groups of $Y^1$ are the same or different, $Y^2$ represents F or Cl, m represents an integer of 1 to 5, the m atoms of $Y^2$ are the same or different and Z represents F, Cl, Br, I, $-OM^5_{1/L}$ or $-ONR^{15}R^{16}R^{17}R^{18}$; $M^5$ represents a metal having a valence of L and the metal having a valence of L is as defined above, and $R^{15}$, $R^{16}$, $R^{17}$ and $R^{18}$ are the same or different and each represents H or an alkyl group containing 1 to 4 carbon atoms,

when the group -SO$_2$Z in the general formula (I) is not said acid/acid salt group but is a group convertible to such acid/acid salt group,'said fluoropolymer precursor is one subjected to a conversion treatment, after the above-mentioned polymerization, for the conversion of said group -SO$_2$Z to the above-mentioned acid/acid salt group, and said heat treatment comprises heating said fluoropolymer precursor at 120 to 400°C.

The present invention relates to an electrolyte membrane comprising the fluoropolymer mentioned above.

The present invention relates to an immobilized active substance material comprising the fluoropolymer mentioned above and an active substance.

The present invention relates to a membrane-electrode assembly comprising the immobilized active substance material mentioned above.

The present invention relates to a solid polymer electrolyte fuel cell comprising the membrane-electrode assembly mentioned above.

The present invention relates to a solid polymer electrolyte fuel cell comprising the electrolyte membrane mentioned above.

In the following, the invention is described in detail.

The fluoropolymer of the invention contains acid/acid salt groups and has -CF$_2$H groups at polymer chain terminals.

The above phrase "polymer chain terminal" means "polymer main chain terminal".

The fluoropolymer of the invention may be any one containing acid/acid salt groups and having -CF$_2$H groups at main chain terminals, but not exclusion of one having -CF$_2$H groups not only at main chain terminals but also at side chain terminals.

The above-mentioned fluoropolymer preferably has a content (mmol) of -CF$_2$H groups, per kilogram of the polymer, of 0.3 to 22 mmol/kg, more preferably 0.5 to 18 mmol/kg.

When the fluoropolymer has a -CF$_2$H content within the above range, a Fenton's reagent-based stability test, which is to be described later herein, generally gives a fluoride ion concentration of not higher than 12 ppm, preferably not higher than 10 ppm.

In the present specification, when polymer side chain terminals are referred to, the term "polymer side chain terminals" is used and, by merely saying "polymer chain terminals", it is meant that polymer main chain terminals are referred to.

The fluoropolymer of the invention is preferably a perfluoropolymer.

The acid/acid salt groups can be classified into acid groups and acid salt groups.

The acid groups each is a sulfonic acid group, - SO$_2$NHR$^{19}$ or a phosphoric acid group.

The above symbol R$^{19}$ represents H, an alkyl group or a sulfonyl-containing group.

The alkyl group is not particularly restricted but includes alkyl groups containing 1 to 4 carbon atoms, for example methyl and ethyl. The alkyl group may be one in which one or more H atoms are substituted by one or more F, Cl, Br and/or I atoms.

The sulfonyl-containing group is a sulfonyl group-containing fluoroalkyl group, for example a fluoroalkylsulfonyl group, which may optionally contain a terminal substituent(s). The fluoroalkylsulfonyl group is, for example, -SO$_2$R$_f^1$Z$^2$ (in which R$_f^1$ represents a fluoroalkylene group and Z$^2$ represents an organic group). The organic group is, for example, -SO$_2$F, and the fluoroalkylsulfonyl group may be such an indefinite number of repetitions as -SO$_2$(NR$^{19}$SO$_2$R$_f^1$SO$_2$)$_k$NR$^{19}$SO$_2$- (in which k represents an integer of not smaller than 1 and R$_f^1$ represents a fluoroalkylene group) or, for example, - SO$_2$(NR$^{19}$SO$_2$R$_f^1$SO$_2$)$_k$NR$^{19}$SO$_2$F (in which k is an integer of not smaller than 1 but not greater than 100 and R$^{19}$ and R$_f^1$ are as defined above).

The above-mentioned acid salt groups are -SO$_3$NR$^3$R$^4$R$^5$R$^6$, -SO$_3$M$^1_{1/L}$, -SO$_2$NM$^6_{1/L}$R$^2$, -PO$_3$(NR$^7$R$^8$R$^9$R$^{10}$)$_2$ and/or -PO$_3$M$^2_{2/L}$.

The symbols R$^3$, R$^4$, R$^5$, R$^6$, R$^7$, R$^8$, R$^9$ and R$^{10}$ are the same or different and each represents H or an alkyl group containing 1 to 4 carbon atoms. The symbol R$^2$ represents H, M$^7_{1/L}$, an alkyl group or a sulfonyl-containing group. The symbols M$^1$, M$^2$, M$^6$ and M$^7$ are the same or different and each represents a metal having a valence of L. The metal having a valence of L is a metal belonging to the group 1, 2, 4, 8, 11, 12 or 13 of the long-form periodic table.

The above-mentioned acid/acid salt groups are preferably sulfonic acid groups, -SO$_3$NR$^3$R$^4$R$^5$R$^6$ and/or - SO$_3$M$^1_{1/L}$ (in which R$^3$, R$^4$, R$^5$, R$^6$ and M$^1$ are as defined above) .

The above-mentioned fluoropolymer preferably contains the acid/acid salt groups mentioned above in an amount of not smaller than 0.1 milliequivalent/g but not greater than 2.5 milliequivalents/g, more preferably not smaller than 0.5 milliequivalent/g but not greater than 2 milliequivalents/g, although that amount is not particularly restricted.

The above-mentioned fluoropolymer is preferably one obtained by subjecting a fluoropolymer precursor to heat treatment. The fluoropolymer precursor contains the above-mentioned acid/acid salt groups and has -CF$_2$COOX groups (in which X represents H, NR$^{11}$R$^{12}$R$^{13}$R$^{14}$ or M$^9_{1/L}$; R$^{11}$, R$^{12}$, R$^{13}$ and R$^{14}$ are the same or different and each represents H or an alkyl group containing 1 to 4 carbon atoms and M$^4$ represents a metal having a valence of L, the metal having a valence of L being as mentioned above) at polymer chain terminals. The heat treatment is not particularly restricted but may be one effective in converting the above-mentioned $-CF_2COOX$ (X being as defined above) to $-CF_2H$, for example the method to be described later herein.

The above-mentioned fluoropolymer precursor preferably has a content (mmol) of $-CF_2COOX$ groups at polymer chain terminals, of 0.3 to 22 mmol/kg per kilogram of the polymer. A more preferred lower limit to the content of $-CF_2COOX$ groups at polymer chain terminals is 0.5, a still more preferred lower limit thereto is 1, and a more preferred upper limit thereto is 18.

The fluoropolymer of the invention generally has $-CF_2H$ groups resulting from conversion of the $-CF_2COOX$ groups upon the above-mentioned heat treatment. The percentage of the above-mentioned conversion is the value calculated according to the equation:

$$\text{Conversion rate (\%)} = \{1 - (I/I_0)\} \times 100$$

where $I_0$ is the $-CF_2COOX$ peak intensity before heat treatment and I is the $-CF_2COOX$ peak intensity after heat treatment, with an IR spectrum of a polymer having no $-CF_2COOX$ terminal as prepared separately being used as a zero standard for peak intensity comparison between the spectra before and after heat treatment according to the method of producing a fluoropolymer of the invention. The conversion rate is preferably not lower than 60%, more preferably not lower than 80%, still more preferably not lower than 90%.

When the conversion rate is 60% or above, fluoropolymers having a content (mmol) of $-CF_2H$ groups of 0.18 to 13.2 mmol/kg per kilogram of the polymer are obtained. When the above-mentioned conversion rate is 60% or above with respect to the fluoropolymer precursor before heat treatment, a preferred lower limit to the content of $-CF_2H$ groups at polymer chain terminals is 0.5, a more preferred lower limit is 1, and a preferred upper limit is 18 (mmol/kg).

In the practice of the invention, the fluoropolymer precursor is preferably one obtained by polymerizing a perhalovinyl ether derivative represented by the general formula (I):

$$CF_2=CF-O-(CF_2CFY^1-O-)_n-(CFY^2)_m-SO_2Z \qquad (I)$$

wherein $Y^1$ represents F, Cl or a perfluoroalkyl group, n represents an integer of 0 to 3, the n atoms/groups of $Y^1$ may be the same or different, $Y^2$ represents F or Cl, m represents an integer of 1 to 5, the m atoms of $Y^2$ may be the same or different and Z represents F, Cl, Br, I, $-OM^5_{1/L}$ or $-ONR^{15}R^{16}R^{17}R^{18}$; $M^5$ represents a metal having a valence of L and the metal having a valence of L is as defined above, and $R^{15}$, $R^{16}$, $R^{17}$ and $R^{18}$ are the same or different and each represents H or an alkyl group containing 1 to 4 carbon atoms.

The fluoropolymer precursor may be an acid salt type group-containing polymer resulting from conversion, by hydrolysis treatment, of a polymer containing groups other than the above-mentioned acid/acid salt group but convertible to the acid/acid salt groups, for example in the case where Z in $-SO_2Z$ in the above general formula (I) is F, Cl, Br or I or in the case where the polymer contains $-SO_2NR^{22}R^{23}$ groups (in which $R^{22}$ and $R^{23}$ are the same or different and each represents an alkyl group or a sulfonyl-containing group). The above-mentioned fluoropolymer precursor may also be a polymer obtained by subjecting a polymer containing groups (hereinafter, "first groups") falling under the above-defined class of acid/acid salt groups to hydrolysis treatment and/or acid treatment to convert the first groups to groups (hereinafter, "second groups") also falling under the class of acid/acid salt groups but differing from the above-mentioned first groups. The conversion of the first groups to the second groups includes, among others, the conversion of the species of the acid salt group-constituting metal having a valence of L to another species, the conversion of acid groups to acid salt groups, and the conversion of acid salt groups to acid groups.

When the group $-SO_2Z$ in the above general formula (I) is not the above-mentioned acid/acid salt group, the fluoropolymer precursor mentioned above is one resulting from some acid/acid salt group conversion treatment, after the above-mentioned polymerization, for the conversion of the above-mentioned $-SO_2Z$ to the above-mentioned acid/acid salt group.

By saying "the group $-SO_2Z$ in the general formula (I) is not the above-mentioned acid/acid salt group" herein, it is meant that the group $-SO_2Z$ in the above general formula (I) is different in kind from the acid/acid salt group which the fluoropolymer of the invention as obtained by subjecting the fluoropolymer precursor having that $-SO_2Z$ group to heat treatment has. In case the $-SO_2Z$ group in the above general formula (I) is not the acid/acid salt group intended to be owned by the fluoropolymer, it becomes necessary to convert this $-SO_2Z$ to the desired acid/acid salt group after polymerization of the perhalovinyl ether derivative mentioned above prior to the heat treatment mentioned above, since that heat treatment will not transform the acid/acid salt group.

The acid/acid salt group conversion treatment mentioned above is not particularly restricted but may be any treatment provided that it can convert the $-SO_2Z$ in the above general formula (I) to the desired acid/acid salt group mentioned above. As for the acid/acid salt group conversion treatment, when Z in $-SO_2Z$ in the above general formula (I) is F, Cl, Br or I, there may be mentioned, for example, the hydrolysis treatment for converting the above-mentioned $-SO_2Z$ to an acid/acid salt group. When Z in $-SO_2Z$ in the above general formula (I) is $-OM^5_{1/L}$ or $-ONR^{15}R^{16}R^{17}R^{18}$ (in which $M^5$, $R^{15}$, $R^{16}$, $R^{17}$ and $R^{18}$ are as defined above; in this paragraph, the same also shall apply), the above-mentioned acid/acid salt group conversion treatment may also be a treatment for converting the above-mentioned $M^5_{1/L}$ or $-NR^{15}R^{16}R^{17}R^{18}$ to another species in the category of $M^5_{1/L}$ or $-NR^{15}R^{16}R^{17}R^{18}$ or, when Z in $-SO_2Z$ in the above general formula (I) is $-OM^5_{1/L}$ or $-ONR^{15}R^{16}R^{17}R^{18}$, it may be an acid treatment for converting the above-mentioned $-SO_2Z$ to $-SO_3H$.

Further, $-SO_2Z$ in the above general formula (I) can be converted to $-SO_2NR^1R^2$ (in which $R^1$ and $R^2$ are as defined above) by reacting with $NHR^1R^2$, for instance.

The method of producing a fluoropolymer of the invention is a method of producing a fluoropolymer by subjecting a fluoropolymer precursor containing acid/acid salt groups and having $-CF_2COOX$ (in which X represents H, $NR^{11}R^{12}R^{13}R^{14}$ or $M^4_{1/L}$; $R^{11}$, $R^{12}$, $R^{13}$ and $R^{14}$ are the same or different and each represents H or an alkyl group containing 1 to 4 carbon atoms and $M^4$ represents a metal having a valence of L, the metal having a valence of L being as defined above) groups at polymer chain terminals to heat treatment for the conversion of the $-CF_2COOX$ (X being as defined above) groups to $-CF_2H$ groups (hereinafter such conversion is sometimes referred to as "terminal group conversion").

The above-mentioned group $-CF_2H$ is a very stable group as compared with $-CF_2COOX$ groups (X being as defined above) and, in ordinary fields of application of the fluoropolymer obtained, for example in the fields of use in which the fluoropolymer is heated at high temperatures, it remains still stable.

The method of producing a fluoropolymer of the invention consists in stabilizing polymer chain terminals by heat treatment and, therefore, is superior to the conventional fluorination treatment of polymer chain terminals in that the fluorination equipment required in the art is no more necessary and in that those side reactions possibly occurring in fluorination treatment are no more encountered. The "fluorination treatment" so referred to herein is a treatment carried out under feeding of a fluorine source from outside the system for fluorinating thermally unstable groups such as $-COOX$.

In the method of producing a fluoropolymer of the invention, the fluoropolymer precursor is one obtained by polymerizing a perhalovinyl ether derivative of the general formula (I) given above. In the general formula (I), $Y^2$ is preferably F, n is preferably 0 or 1, and m is preferably 2 or 3 and, more preferably, n is 0 and m is 2.

The fluoropolymer precursor is preferably an at least binary copolymer obtained by polymerizing the above-mentioned perhalovinyl ether derivative and a monomer copolymerizable with the perhalovinyl ether derivative.

The monomer copolymerizable with the perhalovinyl ether derivative is, for example, an ethylenic fluoromonomer. The ethylenic fluoropolymer is not particularly restricted but may be any one having a vinyl group and containing fluorine atoms in lieu of all carbon-bound hydrogen atoms. It is different from the above-mentioned perhalovinyl ether derivative, however.

The ethylenic fluoromonomer includes, among others, haloethylenic monomers represented by the general formula:

$$CF_2=CF-R_f^2$$

wherein $R_f^2$ represents a fluorine or chlorine atom, $-R_f^3$ or $-OR_f^3$ in which $R_f^3$ represents a straight or branched fluoroalkyl group containing 1 to 9 carbon atoms and optionally containing an ether oxygen atom or atoms, and hydrogen-containing fluoroethylenic monomers represented by the general formula:

$$CHY^3=CFY^4$$

wherein $Y^3$ represents H or a fluorine atom and $Y^4$ represents H, a fluorine or chlorine atom, $-R_f^4$ or $-OR_f^4$; $R_f^4$ represents a straight or branched fluoroalkyl group containing 1 to 9 carbon atoms and optionally containing an ether oxygen atom or atoms.

Preferred as the ethylenic fluoromonomer are $CF_2=CF_2$, $CH_2=CF_2$, $CF_2=CFCl$, $CF_2=CFH$, $CH_2=CFH$, $CF_2=CFCF_3$ and/or fluorovinyl ethers represented by $CF_2=CF-O-R_f^5$; $R_f^5$ represents a fluoroalkyl group containing 1 to 9 carbon atoms or a fluoropolyether group containing 1 to 9 carbon atoms. The fluorovinyl ethers are preferably those in which $R_f^5$ is a perfluoroalkyl group containing 1 to 3 carbon atoms.

The ethylenic fluoromonomer is preferably a perhaloethylenic monomer, in particular a perfluoroethylenic monomer, and more preferably is $CF_2=CF_2$. Either one single species or a combination of two or more species of the ethylenic fluoromonomer can be used.

The fluoropolymer precursor may also be one obtained by further subjecting another copolymerizable monomer, in addition to the ethylenic fluoromonomer mentioned above, to polymerization to provide the fluoropolymer with various functions at usage levels at which the fundamental performance characteristics of the fluoropolymer will not be adversely affected. The other copolymerizable monomer is not particularly restricted but may be appropriately selected from among copolymerizable monomers according to the intended purpose of introduction, for example, polymerization rate control, polymer composition control, elasticity modulus and other mechanical physical properties control and/or crosslinking site introduction. Mention may be made of a monomer having two or more unsaturated bonds, for example a perfluorodivinyl ether, and a cyano group-containing monomer, among others.

The above-mentioned fluoropolymer precursor preferably has a perhalovinyl ether derivative unit content of 5 to 40 mole percent. At levels lower than 5 mole percent, the fluoropolymer obtained may show decreased performance characteristics as an electrolyte in some instances and, at levels exceeding 40 mole percent, the membrane-shaped moldings made of the fluoropolymer obtained may become unsatisfactory in mechanical strength in certain cases. A more preferred lower limit is 8 mole percent, and a more preferred upper limit is 35 mole percent. In cases where the fluoropolymer of the invention has a higher sulfonic acid group concentration on the fluoropolymer particle surface than in the fluoropolymer particle inside, the perhalovinyl ether derivative unit content on the fluoropolymer particle surface is required to be within the range mentioned above.

The term "perhalovinyl ether derivative unit" as used herein means a segment derived from the perhalovinyl ether derivative and constituting a part of the molecular structure of the fluoropolymer precursor. The "perhalovinyl ether derivative unit content" so referred to herein is the proportion of the number of moles of the perhalovinyl ether derivative from which the perhalovinyl ether derivative units are derived to the number of moles of the monomers from which all the monomer units in the fluoropolymer precursor molecule are derived. The "all monomer units" include all segments derived from the monomers constituting the molecular structure of the fluoropolymer precursor. The "monomers from which all the monomer units are derived" therefore correspond to the total amount of the monomers that have participated in constituting the fluoropolymer precursor. The perhalovinyl ether derivative unit content is the value obtained by infrared absorption spectrometry [IR] or by molten-state NMR spectrometry at 300°C.

In producing the fluoropolymer precursor by polymerization, such conventional methods of polymerization, for example, emulsion polymerization, suspension polymerization, bulk polymerization and solution polymerization, can be employed. Among them, emulsion polymerization and solution polymerization are preferably used. When the fluoropolymer precursor is one obtained by emulsion polymerization or solution polymerization, it generally has $-CF_2COOX$ groups (X being as defined above) at polymer chain terminals and, therefore, the method of producing a fluoropolymer of the invention can be advantageous applied thereto.

The fluoropolymer precursor mentioned above may constitute a powder, dispersion, solution or membrane-shaped moldings.

In accordance with the method of producing a fluoropolymer of the invention, the fluoropolymer precursor preferably constituting such a powder, dispersion, solution or membrane-shaped moldings as mentioned above is subjected to heat treatment to convert the above-mentioned $-CF_2COOX$ (X being as defined above) groups to $-CF_2H$ groups. Generally, this heat treatment neither transforms the above-mentioned acid/acid salt groups nor causes any change in the morphology of the powder, dispersion, solution or membrane-shaped moldings.

The fluoropolymer precursor powder may be a powder of the polymer obtained by polymerizing the above-mentioned perhalovinyl ether derivative and, when this polymer is a polymer having groups other than the above-mentioned acid/acid salt groups but convertible to the acid/acid salt groups, for example when Z in $-SO_2Z$ is F, Cl, Br or I, it is converted to a fluoropolymer precursor by subjecting the same to the hydrolysis treatment to be described later herein for the conversion to the above-mentioned acid/acid salt groups such as $-SO_3M^1{}_{1/L}$ or $-SO_3NR^3R^4R^5R^6$ ($M^1$, L, $R^3$, $R^4$, $R^5$ and $R^6$ being as defined above). When the polymerization of the perhalovinyl ether derivative is carried out in the manner of emulsion polymerization, the above-mentioned powder is, for example, one obtained from the liquid just after polymerization by an appropriate coagulation procedure and purification procedure and, in the case of solution polymerization, it is, for example, one obtained by removing the reaction solvent used by a conventional method, followed by an appropriate purification procedure.

The fluoropolymer precursor dispersion may be an emulsion polymerization liquid containing the polymer obtained by polymerizing the perhalovinyl ether derivative, or it may be one obtained by dispersing the powder mentioned above in an appropriate dispersion medium. When the polymer is a polymer having groups other than the above-mentioned acid/acid salt groups but convertible to the acid/acid salt groups, for example when Z in $-SO_2Z$ is F, Cl, Br or I, it is converted to a fluoropolymer precursor by subjecting the same to the hydrolysis treatment to be described later herein for the conversion to the above-mentioned acid/acid salt groups such as $-SO_3M^1{}_{1/L}$ or $-SO_3NR^3R^4R^5R^6$ ($M^1$, L, $R^3$, $R^4$, $R^5$ and $R^6$ being as defined above).

The fluoropolymer precursor solution is one obtained by dissolving the powder mentioned above in an appropriate liquid medium by the method disclosed in Japanese Kohyo Publication 2001-504872 or U.S. Patent No. 4,433,082, for instance. The liquid medium is, for example, a water/isopropyl alcohol mixed solvent, and the solution mentioned above can be obtained by heating in this mixed solvent at 230 to 250°C.

The reduced viscosity of the above-mentioned solution increases as the concentration decreases, whereas the dispersion shows no such changes in reduced viscosity and, in this respect, can be distinguished from the solution.

The above-mentioned solution contains rod-form minute resin particles of the fluoropolymer precursor with an aspect ratio of about 5, whereas the fluoropolymer precursor particles contained in the dispersion comprise spherical particles with an average particle diameter of about 10 nm. In this respect, too, they are distinguishable from each other.

The membrane-shaped moldings made of the fluoropolymer precursor mentioned above may be ones obtained by membrane formation under melting using the above-mentioned powder or by pressure molding using the method described in Japanese Kokai Publication S58-37031, for instance, or membrane-shaped ones produced by membrane casting using the above-mentioned dispersion or solution. When the membrane-shaped moldings are ones produced by membrane formation under melting using a powder of a polymer having groups other than the above-mentioned acid/acid salt groups but convertible to the acid/acid salt groups, for example when Z in $-SO_2Z$ is F, Cl, Br or I, the polymer is converted to a fluoropolymer precursor by subjecting the moldings to the hydrolysis treatment to be described later herein, if desired followed by acid treatment, for the conversion to the above-mentioned acid/acid salt groups such as $-SO_3M^1{}_{1/L}$ or $-SO_3NR^3R^4R^5R^6$ ($M^1$, L, $R^3$, $R^4$, $R^5$ and $R^6$ being as defined above) .

The fluoropolymer precursor mentioned above may also be one obtained by hydrolysis treatment/acid treatment further followed by treatment for removing low-molecular-weight substances (hereinafter sometimes referred to as "low-molecular-weight substance removing treatment"). The low-molecular-weight substances are, for example, monomers remaining after the emulsion polymerization mentioned above, polymerization initiator residues, unnecessary low-molecular-weight polymers, products formed upon hydrolysis treatment of the fluoropolymer precursor, and so forth. When residues of the emulsifier used in emulsion polymerization are present, these can also be removed.

The low-molecular-weight substance removing treatment is not particularly restricted but may be, for example, a centrifugation method, electrophoretic method or ultrafiltration method. The ultrafiltration method is preferably used, however.

The ultrafiltration method is not particularly restricted but may be any method using an ultrafiltration apparatus having an ultrafiltration membrane for the removal of low-molecular-weight substances. Thus, for example, mention may be made of the centrifugal ultrafiltration method and circulating ultrafiltration method. Suitably usable as the ultrafiltration membrane-equipped ultrafiltration apparatus are commercially available ones, for example such ones for laboratory use as Centriprep (trademark, product of Amicon), Millitan (trademark, product of Millipore) and Pericon (trademark, product of Millipore). The ultrafiltration process mentioned above can also serve to concentrate the fluoropolymer precursor obtained.

The low-molecular-weight substance removing treatment may be carried out after the above-mentioned hydrolysis treatment or, when an acid treatment is further carried out after the hydrolysis treatment, the treatment in question may be carried out before the acid treatment.

The conversion of $-CF_2COOX$ (X being as defined above) to $-CF_2H$ by the above-mentioned heat treatment presumably proceeds according to the following reaction formula:

$$-CF_2COOX \rightarrow -CF_2{}^- \rightarrow -CF_2H$$

In the above reaction formula, the source of supply of the proton [H$^+$] for the addition to $-CF_2{}^-$ is not particularly restricted but generally is $H_2O$ occurring in the environment surrounding the fluoropolymer precursor. Therefore, the heat treatment mentioned above is generally carried out in the presence of $H_2O$. The "$H_2O$", so referred to herein, which is generally caused to be present in carrying out the heat treatment, means $H_2O$ on the molecule level. The "$H_2O$" of course constitutes "water" which is macroscopic in the sense that it can be recognized by the eye. However, it is not always necessary to be such macroscopic "water" if it is present at least on the molecule level. In the present specification, the above-mentioned macroscopic "water" is sometimes referred to merely as "water" or as "moisture".

When the above-mentioned fluoropolymer precursor constitutes an aqueous dispersion liquid as the dispersion, the $H_2O$ generally caused to be present in the above-mentioned heat treatment can be supplied from the aqueous medium in this aqueous dispersion liquid. When the fluoropolymer precursor constitutes a powder or a membrane, the $H_2O$ can be supplied by the moisture absorbed by the acid/acid salt groups which the fluoropolymer precursor has and, therefore, it is not necessary to add water from outside the system.

When the fluoropolymer precursor constitutes a dispersion or solution, it is necessary to carry out the acid/acid salt groups heating at a temperature not lower than the boiling point of water; therefore, it is generally preferable that the heat treatment be carried out in a closed autoclave under pressurization.

The time required for the above heat treatment can be properly selected according to the kind of the acid/acid salt groups which the fluoropolymer precursor has, whether the fluoropolymer precursor occurs as a powder, dispersion, solution or membrane-shaped molding, the affinity of the fluoropolymer precursor for the solvent, and the heat treatment temperature, among others.

The fluoropolymer precursor is preferably constitutes membrane-shaped moldings. When the fluoropolymer precursor constitutes membrane-shaped moldings, the membrane-shaped moldings after the above-mentioned heat treatment can be directly used when they are to be used in the form of membranes.

The above-mentioned heat treatment can convert $-CF_2COOX$ (X being as defined above) to $-CF_2H$ and, in

carrying out the method of producing a fluoropolymer of the invention, the fluoropolymer precursor is preferably heated at 120 to 400°C. At lower than 120°C, the decarboxylation reaction can hardly proceed in some cases and, at above 400°C, the polymer main chain itself may be decomposed in certain instances. A preferred upper limit to the heat treatment temperature is 350°C, and a more preferred upper limit thereto is 300°C.

The above heat treatment can also be carried out by heating the fluoropolymer precursor in the presence of water or an organic solvent having affinity for water at 120 to 250°C, more preferably by heating at 120 to 220°C, still more preferably at 120 to 200°C. The "water", so referred to herein, which is caused to be present in the above-mentioned heat treatment, is not $H_2O$ on the molecule level but macroscopic water, including, for example, moisture absorbed by the acid/acid salt groups, as mentioned hereinabove.

The decarboxylation temperature can be lowered in the presence of an organic solvent having affinity for water. In particular, when the fluoropolymer precursor constitutes membrane-shaped moldings, the moldings may be deformed at elevated temperatures and, therefore, a high-boiling organic solvent such as a phosphate ester is preferably caused to coexist to thereby lower the treatment temperature and maintain the dimensional stability.

The decarboxylation reaction proceeds at a sufficiently high rate in the presence of an organic solvent having affinity for water. Therefore, even if the heat treatment is carried out at a temperature equal to or higher than the boiling point of the organic solvent, the terminal group conversion can be finished before exhaustion of the organic solvent by evaporation.

As far as the conventional method of stabilizing polymer chain terminal carboxyl groups by heating a fluoropolymer having side chain terminal -SO$_2$F groups at 200°C or above is concerned, it is not known in the art that the addition of water becomes unnecessary owing to the presence of the above-mentioned acid/acid salt groups.

The above-mentioned organic solvent having affinity for water is preferably a polar solvent, more preferably a polar solvent having a boiling point exceeding 100°C but not exceeding 300°C. The organic solvent having affinity for water is not particularly restricted but may be any of those having polarity and having a boiling point exceeding 100°C but not exceeding 300°C, such as phosphate esters, cyclic amides or cyclic amide derivatives, imidazolidine or imidazolidine derivatives, ethylene oxide oligomer monohydroxy ethers, hexamethylphosphoric triamide, dimethyl sulfoxide and tetramethylurea. One or a combination of two or more of these can be used.

The phosphate esters are not particularly restricted but include, among others, phosphoric acid triesters derived from phosphoric acid and alcohols containing 1 to 5 carbon atoms. As the phosphoric acid triesters, there may be mentioned trimethyl phosphate, triethyl phosphate, etc.

The cyclic amides or cyclic amide derivatives are not particularly restricted but include, among others, pyrrolidone at least one hydrogen atom of which may optionally be substituted by an alkyl group containing 1 to 5 carbon atoms. As such pyrrolidone, there may be mentioned 2-methylpyrrolidone, among others.

The above-mentioned imidazolidine or imidazolidine derivatives are not particularly restricted but mention may made of imidazolidine at least one hydrogen atom of which may optionally be substituted by an alkyl group containing 1 to 5 carbon atoms. As such imidazolidine, there may be mentioned 3,4-dimethylimidazolidine and the like.

The above-mentioned ethylene oxide oligomer monohydroxy ethers are not particularly restricted but molecules resulting from ether bonding between a 2 to 10 mole adduct of ethylene oxide and one alkyl group containing 1 to 10 carbon atoms are preferred. The above-mentioned number of moles of addition of ethylene oxide is an average value for an aggregate of such ethylene oxide oligomer monohydroxy ether molecules as mentioned above. As the ethylene oxide oligomer monohydroxy ethers, there may be mentioned, for example, diethylene glycol monoalkyl ethers and triethylene glycol monoalkyl ethers and, as specific examples of such, there may be mentioned diethylene glycol momomethyl ether and triethylene glycol monomethyl ether.

The membrane-shaped moldings, preferably electrolyte membranes, made of the above-mentioned fluoropolymer of the invention also constitute another aspect of the present invention.

The electrolyte membranes may have a membrane thickness of 1 to 200 $\mu$m, for instance.

The immobilized active substance material of the invention comprises the above-mentioned fluoropolymer and an active substance.

The active substance is not particularly restricted but may be any one capable of showing activity in the immobilized active substance material. It can be properly selected according to the intended use of the immobilized active substance material of the invention; for example, a catalyst can be used in certain cases.

The catalyst is not particularly restricted but any of those generally used as electrode catalysts, including, among others, metals containing platinum, ruthenium and/or the like; and those organic metal complexes generally containing at least one metal species as the central metal in which at least one central metal is platinum or ruthenium. Although the metals containing platinum, ruthenium and/or the like may be ruthenium-containing metals, for example ruthenium as a simple substance, platinum-containing metals are preferred. The platinum-containing metals are not particularly restricted but mention may be made of, for example, platinum as a simple substance (platinum black); and platinum-ruthenium alloys. The catalyst mentioned above is generally used in a form carried on a support such as silica, alumina or carbon.

The membrane-electrode assembly [MEA] of the invention comprises the immobilized active substance material mentioned above. The membrane-electrode assembly may contain another substance other than the immobilized active substance material mentioned above provided that said substance will not affect the properties of the immobilized active substance material.

The solid polymer electrolyte fuel cell of the invention comprises the membrane-electrode assembly mentioned above. The solid polymer electrolyte fuel cell is not particularly restricted provided that it comprises the membrane-electrode assembly mentioned above.

The solid polymer electrolyte fuel cell of the invention comprises the above-mentioned electrolyte membrane. The solid polymer electrolyte fuel cell is not particularly restricted provided that it comprises the electrolyte membrane mentioned above. Generally, it may be one comprising such solid polymer electrolyte fuel cell constituent elements as electrodes.

Each of the above-mentioned immobilized active substance material, electrolyte membrane and solid polymer electrolyte fuel cell is one produced by using a fluoropolymer containing acid/acid salt groups and, preferably, it is one obtained by using a fluoropolymer containing acid groups.

EFFECTS OF THE INVENTION

The method of producing a fluoropolymer of the invention, which has the constitution described hereinabove, can give fluoropolymers excellent in stability and improved in durability in a simple and easy manner.

BEST MODES FOR CARRYING OUT THE INVENTION

The following examples illustrate the present invention more specifically. These examples are, however, by no means limitative of the scope of the present invention.

In the examples, various measurements were made using the following methods.

1. Functional group assaying by IR

Each polymer sample was heat-pressed at 270°C and 10 MPa for 20 minutes, and the thus-prepared membrane with a thickness of 150 to 200 $\mu$m was subjected to spectrometry using an FT-IR spectroscope.

2. Stability testing using Fenton's reagent

Each polymer sample was heat-pressed at 270°C and 10 MPa for 20 minutes and then polymer side chain terminal groups were converted to sulfonic acid groups. The thus-obtained membrane was used as a membrane for stability testing.

A 3 g-section of the membrane for stability testing was immersed in a solution prepared by dissolving 1 mg of $FeSO_4 \cdot 7H_2O$ in 20 ml of a 30% aqueous solution of hydrogen peroxide and placed in a bottle made of a tetrafluoroethylene/perfluoro(alkyl vinyl ether) copolymer, and the section was maintained there at 85°C for 20 hours. Then, after cooling to room temperature, the membrane for stability testing was taken out, and the fluoride ion concentration in the liquid phase was measured using a fluoride ion meter.

Example 1

(1) A 3000-ml stainless steel autoclave equipped with a stirrer was charged with 300 g of a 10% aqueous solution of $C_7F_{15}COONH_4$ and 1170 g of pure water, followed by sufficient evacuation and nitrogen substitution. After sufficient evacuation of the autoclave, tetrafluoroethylene [TFE] gas was introduced into the autoclave to a gage pressure of 0.2 MPa, and the temperature was raised to 50°C. Thereafter, 100 g of $CF_2=CFOCF_2CF_2SO_2F$ was injected into the autoclave, and the pressure was raised to a gage pressure of 0.7 MPa by introducing TFE gas. Then, an aqueous solution prepared by dissolving 0.5 g of ammonium persulfate [APS] in 60 g of pure water was injected into the autoclave to initiate the polymerization.

For supplementing that portion of TFE which had been consumed in polymerization, TFE was fed continuously so as to maintain the autoclave pressure at 0.7 MPa. The polymerization was continued while further feeding $CF_2=CFOCF_2CF_2SO_2F$ continuously in an amount corresponding to a mass ratio of 0.53 relative to the TFE fed.

At the time of arrival of the amount of TFE fed at 522 g, the autoclave inside pressure was released and the polymerization was thus discontinued. Then, after cooling to room temperature, 2450 g of a slightly turbid aqueous dispersion containing about 33% by mass of a fluoropolymer precursor was obtained.

A portion of the above-mentioned aqueous dispersion was taken and coagulated with nitric acid, and the coagulated matter was washed with water and dried and subjected to molten-state NMR spectrometry, which revealed that the fluorovinyl ether derivative unit content in the fluoropolymer precursor was 19 mole percent.

(2) A 1200-g portion of the aqueous dispersion obtained was coagulated with nitric acid, and the coagulated matter was washed with water, dried at 90°C for 24 hours and further dried at 120°C for 12 hours to give 400 g of a fluoropolymer powder.

The fluoropolymer powder obtained was immersed in a 20% (by mass) aqueous solution of potassium hydroxide and maintained in this state at 95°C for 24 hours for the hydrolysis of $-SO_2F$ groups. This powder was collected by filtration, sufficiently washed with pure water and then dried at 90°C for 24 hours to give an $-SO_3Na$ group-containing powder. This powder was subjected to heat treatment in an electric oven at 300°C for 1 hour. Samples of the powders before and after treatment were pelletized using KBr and subjected to IR spectroscopy. As a result, carboxyl group-due peaks were observed at about 1776 $cm^{-1}$ and about 1807 $cm^{-1}$ with the powder before treatment, while those peaks were not observed with the powder after heat treatment.

[Preparation of a $-CF_2H$-terminated type membrane]

Using a simplified membrane molding apparatus (product of Imoto Machinery), the fluoropolymer powder (not yet subjected to hydrolysis treatment after drying) obtained from the aqueous dispersion was melt-molded at a temperature of 270°C into a 50-$\mu$m-thick membrane.

(3) The membrane obtained was immersed in a 20% (by mass) aqueous solution of potassium hydroxide and maintained in that state at 95°C for 24 hours for the hydrolysis of $-SO_2F$ groups. Then, the membrane was sufficiently washed with pure water until the washings became neutral. An $-SO_3Na$ type membrane was thus obtained.

A part of this membrane was sufficiently dried, and four sheets prepared therefrom were piled up and subjected to IR spectroscopy, upon which main chain terminal carboxyl group-due absorption peaks were observed at about 1776 $cm^{-1}$ and about 1807 $cm^{-1}$.

[Polymer chain terminal group assaying]

(4) Then, this membrane was immersed in a 1:1 (by mass) mixed solution composed of trimethyl phosphate and water for 5 minutes, then placed in a hot air circulation type drier at 190°C and heat-treated for 1 hour.

Four sheets prepared from the membrane obtained were piled up and subjected to IR spectroscopy. As a result, no carboxyl group-due peaks were observed, and a $-CF_2H$ group-due peak was observed at about 3010 $cm^{-1}$.

[Stability testing using Fenton's reagent]

The membrane obtained as described above under (4) was subjected to stability testing using Fenton's reagent. As a result, the fluoride ion concentration was found to be 6 ppm.

[Polymer chain terminal conversion rate determination]

The $-SO_3Na$ type membrane obtained as described above under (3) was placed, together with 5 g of water, in a 50-$cm^3$ pressure vessel and, after tight sealing, subjected to heat treatment in an electric oven at 125°C for 1 hour. After sufficient cooling, a sample was taken out and dried at 110°C for 1 hour. Four sheets prepared therefrom were piled up and subjected to IR spectroscopy for carboxyl group assaying in the same manner as described above under (4). Similarly, heat treatments were carried out varying the heating temperature to 150°C, 175°C, 200°C or 250°C, each time followed by carboxyl group assaying.

The carboxyl group content before heat treatment was determined and found to be 10 mmol/kg.

The relation between heat treatment temperature and polymer chain terminal conversion rate is shown below in Table 1.

| Heat treatment temperature °C | 125 | 150 | 175 | 200 | 250 |
|---|---|---|---|---|---|
| Polymer chain terminal conversion rate % | 0 | 4 | 20 | 100 | 100 |

[Preparation of a -$CF_2H$-terminated fluoropolymer dispersion]

(6) A 100-ml portion of the fluoropolymer precursor dispersion obtained as described above under (1) was 5-fold diluted with pure water and stirred in a 1000-ml beaker, and the -$SO_2F$ groups which the fluoropolymer precursor had were hydrolyzed at a temperature of 55°C while adding, by drops, a 10% (by mass) aqueous solution of sodium hydroxide to maintain the pH at 10 or above. About 3 hours later, no more pH drop was observed. However, the hydrolysis procedure was further continued for 2 hours and then terminated. During this process, no fluoropolymer precipitation was confirmed by the eye.

(7) The reaction mixture obtained as described above under (6) was subjected to centrifugal ultrafiltration using Centriprep YM-10 (product of Amicon) for removing low-molecular-weight substances and for fluoropolymer purification and concentration. The thus-obtained fluoropolymer dispersion contained 35% by mass of a fluoropolymer having stable -$SO_3Na$ groups.

(8) A 100-cc autoclave was charged with 30 g of the fluoropolymer dispersion obtained as described above under (7) and 15 g of trimethyl phosphate and, after tight sealing, the autoclave inside was maintained at 150°C for 2 hours to give a fluoropolymer dispersion composition for thin membrane molding.

(9) The fluoropolymer dispersion composition for thin membrane molding obtained as described above under (8) was placed in an evaporator and heated at 80°C for 3 hours under evacuation. A white solid was obtained. This was cold pressed to give a thin membrane, which was subjected to IR spectroscopy. Any carboxyl group-due peaks were not observed.

Comparative Example 1

The membrane obtained as described above under (3) was subjected to stability testing using Fenton's reagent. The fluoride ion concentration was 22 ppm.

INDUSTRIAL APPLICABILITY

The fluoropolymer of the invention can be particularly suitably used in the field of solid polymer electrolyte fuel cells and in other fields where stability is required.

**Claims**

1. A fluoropolymer which contains

   (i) groups selected from sulfonic acid groups, phosphoric acid groups, -$SO_2NR^1R^2$, -$SO_3NR^3R^4R^5R^6$, -$SO_3M^1_{1/L}$, -$PO_3(NR^7R^8R^9R^{10})_2$ and/or -$PO_3M^2_{2/L}$,
   wherein
   $R^1$ is H or $M^6_{1/L}$,
   $R^2$ is H, $M^7_{1/L}$, alkyl or a sulfonyl-containing group,
   $R^3$-$R^{10}$ each independently are H or $C_{1-4}$-alkyl,
   $M^1$, $M^2$, $M^6$ and $M^7$ each independently are a metal of group 1, 2, 4, 8, 11, 12 or 13 of the long-form periodic table and having a valence of L; and
   (ii) -$CF_2H$ groups at polymer chain terminals.

2. The fluoropolymer of Claim 1, which is obtained by heat treating a fluoropolymer precursor containing groups (i) as defined in claim 1 and, at polymer chain terminals, groups of the formula -$CF_2COOX$, wherein
   X is H, $NR^{11}R^{12}R^{13}R^{14}$ or $M^4_{1/L}$; with $R^{11}$-$R^{14}$ each independently being H or $C_{1-4}$-alkyl, and $M^4$ being a metal as defined in claim 1,
   such that the -$CF_2COOX$ groups can be converted to -$CF_2H$.

3. The fluoropolymer of Claim 1 or 2, wherein the groups (i) are selected from sulfonic acid groups, $-SO_3M^1{}_{1/L}$ and $-SO_3NR^3R^4R^5R^6$.

4. A method of producing the fluoropolymer of any of Claims 1-3, comprising

heat treating a fluoropolymer precursor containing groups (i) as defined in claim 1 and, at polymer chain terminals, groups of the formula $-CF_2COOX$, wherein

X is H, $NR^{11}R^{12}R^{13}R^{14}$ or $M^4{}_{1/L}$; with $R^{11}$-$R^{14}$ each independently being H or $C_{1-4}$-alkyl; and $M^4$ being a metal as defined in claim 1,

at 120-400°C to convert the $-CF_2COOX$ groups to $-CF_2H$; wherein the fluoropolymer precursor is obtained by polymerizing a perhalovinyl ether derivative of formula (I) :

$$CF_2=CF-O-(CF_2CFY^1-O)_n-(CFY^2)_m-SO_2Z \qquad (I)$$

wherein

m is an integer of 1-5,
n is an integer of 0-3,
$Y^1$ each individually is F, Cl or perfluoroalkyl,
$Y^2$ each individually is F or Cl, and
Z is F, Cl, Br, I, $-OM^5{}_{1/L}$ or $-ONR^{15}R^{16}R^{17}R^{18}$; wherein $M^5$ is a metal having a valence of L and the metal having a valence of L is as defined above, and $R^{15}$-$R^{18}$ each individually are H or $C_{1-4}$-alkyl;

and when the group $-SO_2Z$ in formula (I) is not a group (i) but is a group convertible to such a group, the fluoropolymer precursor after polymerization is subjected to a treatment for conversion of $-SO_2Z$ into a group (i).

5. The method of Claim 4, wherein the heat treatment comprises heating the fluoropolymer precursor at 120-200°C in the presence of water or a polar organic solvent.

6. The method of Claim 5, wherein the polar organic solvent is a liquid having a boiling point exceeding 100°C but not exceeding 300°C.

7. The method of any of Claims 4-6, wherein the fluoropolymer precursor is an at least binary copolymer obtained by polymerizing the perhalovinyl ether derivative and a monomer copolymerizable therewith.

8. The method of any of Claims 4-7, wherein $Y^2$ is F, n is 0 or 1 and m is 2 or 3.

9. The method of any of Claims 4-8, wherein the fluoropolymer precursor constitutes a powder, dispersion, solution or membrane-shaped molding.

10. The method of Claim 9, wherein the fluoropolymer precursor constitutes a membrane-shaped molding.

11. An electrolyte membrane comprising the fluoropolymer of any of Claims 1-3.

12. An immobilized active substance material comprising the fluoropolymer of any of Claims 1-3 and an active substance.

13. The immobilized active substance material of Claim 12, wherein the active substance is a catalyst.

14. The immobilized active substance material of Claim 13, wherein the catalyst is a platinum-containing metal.

15. A membrane-electrode assembly comprising the immobilized active substance material of Claim 13 or 14.

16. A solid polymer electrolyte fuel cell comprising the electrolyte membrane of Claim 11 or the membrane-electrode assembly of Claim 15.

**Patentansprüche**

1. Fluorpolymer, das enthält

(i) Gruppen, ausgewählt aus Sulfonsäuregruppen, Phosphorsäuregruppen, $-SO_2NR^1R^2$, $-SO_3NR^3R^4R^5R^6$, $-SO_3M^1{}_{1/L}$, $-PO_3(NR^7R^8R^9R^{10})_2$ und/oder $-PO_3M^2{}_{2/L}$,
worin
$R^1$ H oder $M^6{}_{1/L}$ ist,
$R^2$ H, $M^7{}_{1/L}$, Alkyl oder eine sulfonylhaltige Gruppe ist,
$R^3$-$R^{10}$ jeweils unabhängig H oder $C_{1-4}$-Alkyl sind,
$M^1$, $M^2$, $M^6$ und $M^7$ jeweils unabhängig ein Metal der Gruppe 1, 2, 4, 8, 11, 12 oder 13 des Langperiodensystems und eine Valenz L aufweist; und
(ii) $-CF_2H$-Gruppen an den Enden der Polymerkette.

2. Fluorpolymer gemäß Anspruch 1, das erhalten ist durch Wärmebehandeln eines Fluorpolymervorläufers, der wie in Anspruch 1 definierte Gruppen (i) und an den Enden der Polymerkette Gruppen der Formel $-CF_2COOX$ enthält, worin
X H, $NR^{11}R^{12}R^{13}R^{14}$ oder $M^4{}_{1/L}$ ist; wobei $R^{11}$-$R^{14}$ jeweils unabhängig H oder $C_{1-4}$-Alkyl ist und $M^4$ ein wie in Anspruch 1 definiertes Metall ist,
so dass die $-CF_2COOX$-Gruppen zu $-CF_2H$ umgewandelt werden können.

3. Fluorpolymer gemäß Anspruch 1 oder 2, worin die Gruppen (i) ausgewählt sind aus Sulfonsäuregruppen, $-SO_3M^1{}_{1/L}$ und $-SO_3NR^3R^4R^5R^6$.

4. Verfahren zur Herstellung des Fluorpolymers gemäß mindestens einem der Ansprüche 1-3, umfassend Wärmebehandeln eines Fluorpolymervorläufers, der wie in Anspruch 1 definierte Gruppen (i) und an den Enden der Polymerkette Gruppen der Formel $-CF_2COOX$ enthält, worin
X H, $NR^{11}R^{12}R^{13}R^{14}$ oder $M^4{}_{1/L}$ ist; wobei $R^{11}$-$R^{14}$ jeweils unabhängig H oder $C_{1-4}$-Alkyl ist und $M^4$ ein wie in Anspruch 1 definiertes Metall ist,
bei 120-400°C, so dass die $-CF_2COOX$-Gruppen zu $-CF_2H$ umgewandelt werden;
worin der Fluorpolymervorläufer erhalten ist durch Polymerisieren eines Perhalogenvinylether-Derivats der Formel (I):

$$CF_2=CF-O-(CF_2CFY^1-O)_n-(CFY^2)_m-SO_2Z \qquad (I)$$

worin

m eine Zahl von 1-5 ist,
n eine Zahl von 0-3 ist,
$Y^1$ jeweils unabhängig F, Cl oder Perfluoroalkyl ist, $Y^2$ jeweils unabhängig F oder Cl ist, und
Z F, Cl, Br, I, $-OM^5{}_{1/L}$ oder $-ONR^{15}R^{16}R^{17}R^{18}$ ist; worin $M^5$ ein Metall mit einer Valenz L ist und das Metall mit einer Valenz L wie oben definiert ist, und $R^{15}$-$R^{18}$ jeweils unabhängig H oder $C_{1-4}$-Alkyl sind;
und wenn die Gruppe $-SO_2Z$ in Formel (I) keine Gruppe (I) ist, sondern eine Gruppe ist, die in eine solche Gruppe konvertierbar ist, wird der Fluorpolymervorläufer nach der Polymerisation einer Behandlung zur Umwandlung von $-SO_2Z$ in eine Gruppe (i) unterworfen.

5. Verfahren gemäß Anspruch 4, worin die Wärmebehandlung das Erwärmen des Fluorpolymervorläufers bei 120-200°C in Gegenwart von Wasser oder eines polaren organischen Lösungsmittels umfasst.

6. Verfahren gemäß Anspruch 5, worin das polare organische Lösungsmittel eine Flüssigkeit ist, die einen Siedepunkt aufweist, der 100°C überschreitet, aber nicht 300°C überschreitet.

7. Verfahren gemäß mindestens einem der Ansprüche 4-6, worin der Fluorpolymervorläufer mindestens ein binäres Copolymer ist, das durch Polymerisieren des Perhalogenvinylether-Derivats und eines damit copolymerisierbaren Monomers erhalten ist.

8. Verfahren gemäß mindestens einem der Ansprüche 4-7, worin $Y^2$ F ist, n 0 oder 1 ist und m 2 oder 3 ist.

9. Verfahren gemäß mindestens einem der Ansprüche 4-8, worin der Fluorpolymervorläufer ein Pulver, eine Dispersion, eine Lösung oder ein membranförmiges Formteil bildet.

10. Verfahren gemäß Anspruch 9, worin der Fluorpolymervorläufer ein membranförmiges Formteil bildet.

**11.** Elektrolytmembran, umfassend das Fluorpolymer gemäß mindestens einem der Ansprüche 1-3.

**12.** Immobilisiertes Aktivsubstanzmaterial, umfassend das Fluorpolymer gemäß mindestens einem der Ansprüche 1 bis 3 und eine Aktivsubstanz.

**13.** Immobilisiertes Aktivsubstanzmaterial gemäß Anspruch 12, worin die Aktivsubstanz ein Katalysator ist.

**14.** Immobilisiertes Aktivsubstanzmaterial gemäß Anspruch 13, worin der Katalysator ein platinhaltiges Metall ist.

**15.** Membranelektrodenanordnung, umfassend das immobilisierte Aktivsubstanzmaterial gemäß Anspruch 13 oder 14.

**16.** Festpolymerelektrolyt-Brennstoffzelle, umfassend die Elektrolytmembran gemäß Anspruch 11 oder die Membranelektrodenanordnung gemäß Anspruch 15.

**Revendications**

**1.** Fluoropolymère qui contient :

(i) des groupements sélectionnés parmi des groupements acide sulfonique, des groupements acide phospho-rique, $-SO_2NR^1R^2$, $-SO_3NR^3R^4R^5R^6$, $-SO_3M^1_{1/L}$, $-PO_3(NR^7R^8R^9R^{10})_2$ et/ou $-PO_3M^2_{2/L}$, dans lequel
$R^1$ est H ou $M^6_{1/L}$,
$R^2$ est H, $M^7_{1/L}$, un alkyle ou un groupement contenant un sulfonyle,
$R^3$ à $R^{10}$ sont chacun indépendamment H ou un alkyle en $C_1$-$C_4$, $M^1$, $M^2$, $M^6$ et $M^7$ sont chacun indépendamment un métal du groupe 1, 2, 4, 8, 11, 12 ou 13 du tableau périodique de forme longue et ayant une valence de L; et
(ii) des groupements $-CF_2H$ aux extrémités de chaîne polymère.

**2.** Fluoropolymère selon la revendication 1, qui est obtenu par traitement à chaud d'un précurseur de fluoropolymère contenant des groupements (i) tels que définis dans la revendication 1 et, aux extrémités de chaîne polymère, des groupements de formule $-CF_2COOX$, dans lequel
X est H, $NR^{11}R^{12}R^{13}R^{14}$ ou $M^4_{1/L}$; avec $R^{11}$ à $R^{14}$ qui sont chacun indépendamment H ou un alkyle en $C_1$-$C_4$, et $M^4$ qui est un métal tel que défini dans la revendication 1,
de sorte que les groupements $-CF_2COOX$ puissent être convertis en $-CF_2H$.

**3.** Fluoropolymère selon la revendication 1 ou 2, dans lequel les groupements (i) sont sélectionnés parmi les groupe-ments acide sulfonique, $-SO_3M^1_{1/L}$ et $-SO_3NR^3R^4R^5R^6$.

**4.** Procédé de production du fluoropolymère selon l'une quelconque des revendications 1 à 3, comprenant :

le traitement à chaud d'un précurseur de fluoropolymère contenant des groupements (i) tels que définis dans la revendication 1 et, aux extrémités de chaîne polymère, des groupements de formule $-CF_2COOX$, dans lequel X est H, $NR^{11}R^{12}R^{13}R^{14}$ ou $M^4_{1/L}$; avec $R^{11}$ à $R^{14}$ qui sont chacun indépendamment H ou un alkyle en $C_1$-$C_4$; et $M^4$ qui est un métal tel que défini dans la revendication 1,
à 120-400 °C pour convertir les groupements $-CF_2COOX$ en $-CF_2H$ ;
dans lequel le précurseur de fluoropolymère est obtenu en polymérisant un dérivé d'éther perhalovinylique de formule (I) :

$$CF_2 = CF\text{-}O\text{-}(CF_2CFY^1\text{-}O)_n\text{-}(CFY^2)_m\text{-}SO_2Z \qquad (I)$$

où

m est un entier de 1 à 5,
n est un entier de 0 à 3,
$Y^1$ est chacun individuellement F, Cl ou un perfluoroalkyle,
$Y^2$ est chacun individuellement F ou Cl, et
Z est F, Cl, Br, I, $-OM^5_{1/L}$ ou $-ONR^{15}R^{16}R^{17}R^{18}$; dans lequel $M^5$ est un métal ayant une valence de L et le métal ayant une valence de L est tel que défini ci-dessus, et $R^{15}$ à $R^{18}$ sont chacun individuellement H ou un alkyle en $C_1$-$C_4$ ;

Et lorsque le groupement -SO$_2$Z de formule (I) n'est pas un groupement (i) mais est un groupement convertible en un tel groupement, le précurseur de fluoropolymère après polymérisation est soumis à un traitement pour la conversion de -SO$_2$Z en un groupement (i).

**5.** Procédé selon la revendication 4, dans lequel le traitement à chaud comprend le chauffage du précurseur de fluoropolymère à 120-200 °C en présence d'eau ou d'un solvant polaire organique.

**6.** Procédé selon la revendication 5, dans lequel le solvant polaire organique est un liquide ayant un point d'ébullition dépassant 100 °C mais ne dépassant pas 300 °C.

**7.** Procédé selon l'une quelconque des revendications 4 à 6, dans lequel le précurseur de fluoropolymère est au moins un copolymère binaire obtenu en polymérisant le dérivé d'éther perhalovinylique et un monomère copolymérisable avec celui-ci.

**8.** Procédé selon l'une quelconque des revendications 4 à 7, dans lequel Y$^2$ est F, n est 0 ou 1 et m est 2 ou 3.

**9.** Procédé selon l'une quelconque des revendications 4 à 8, dans lequel le précurseur de fluoropolymère constitue une poudre, une dispersion, une solution ou un moulage en forme de membrane.

**10.** Procédé selon la revendication 9, dans lequel le précurseur de fluoropolymère constitue un moulage en forme de membrane.

**11.** Membrane d'électrolyte comprenant le fluoropolymère selon l'une quelconque des revendications 1 à 3.

**12.** Matériau de substance active immobilisé comprenant le fluoropolymère selon l'une quelconque des revendications 1 à 3 et une substance active.

**13.** Matériau de substance active immobilisé selon la revendication 12, dans lequel la substance active est un catalyseur.

**14.** Matériau de substance active immobilisé selon la revendication 13, dans lequel le catalyseur est un métal contenant du platine.

**15.** Ensemble membrane-électrodes comprenant le matériau de substance active immobilisé de la revendication 13 ou 14.

**16.** Pile à combustible à électrolyte polymère solide comprenant la membrane d'électrolyte de la revendication 11 ou l'ensemble membrane-électrodes de la revendication 15.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S4623245 B
- GB 1210794 A
- JP S373127 B
- US 3085083 A
- JP 2001504872 A
- US 4433082 A
- JP S5837031 B